# EUROPÄISCHE PATENTSCHRIFT

(11) **EP 2 930 813 B1**
(45) Veröffentlichungstag und Bekanntmachung des Hinweises auf die Patenterteilung: **28.10.2020**
(21) Anmeldenummer: 15152151.5
(22) Anmeldetag: 22.01.2015
(51) Int. Cl.: H02J 3/28, H02J 7/00, B60L 53/63, H02J 3/32, H02J 13/00

(54) **Verfahren und Vorrichtung zur Erfassung einer elektrischen Größe eines elektrischen Verteilnetzes**
Method and device for detecting an electrical variable of an electrical distribution network
Procédé et dispositif d'enregistrement d'une grandeur électrique d'un réseau de distribution électrique

(30) Priorität: 08.04.2014 DE 102014005089
(43) Veröffentlichungstag der Anmeldung: 14.10.2015
(73) Patentinhaber: RWE Deutschland AG, 45128 Essen (DE)
(72) Erfinder: Gaul, Armin, Dr.-Ing., 59379 Selm (DE); Hammerschmidt, Torsten, Dr., 44267 Dortmund (DE)
(74) Vertreter: Cohausz & Florack

(56) Entgegenhaltungen:
- EP-A1- 2 683 048
- US-A1- 2012 019 203
- US-A1- 2014 084 874

## Beschreibung

Der Gegenstand betrifft ein Verfahren zur Erfassung einer elektrischen Größe eines elektrischen Verteilnetzes. Darüber hinaus betrifft der Gegenstand eine Ladestation für Elektrofahrzeuge, eingerichtet zur Erfassung einer elektrischen Größe eines elektrischen Verteilnetzes sowie ein System mit einer solchen Ladestation.

Aufgrund der starken Veränderung im Bereich der dezentralen Erzeugung elektrischer Leistung ist die Wartung und Betriebsführung von elektrischen Verteilnetzen zunehmend schwierig. Insbesondere ist die Regelung zur Einhaltung der zulässigen Spannungsbänder beim Endkunden, als auch die Netzbeobachtbarkeit, insbesondere die Berechnung von Leistungsflüssen innerhalb eines Verteilnetzes, an sich dynamisch verändernde Rahmenbedingungen anzupassen.

Herkömmlich erfolgt die Regelung zur Einhaltung der zulässigen Spannungsbänder, insbesondere der Höhe der elektrischen Spannung am Anschlusspunkt des Endkunden in der Niederspannungsebene durch einen Stufensteller am Verteilnetztransformator. Der Verteilnetztransformator ist dabei derjenige Transformator, der das Hochspannungsnetz mit dem Mittelspannungsnetz koppelt. Das Mittelspannungsnetz als auch das Niederspannungsnetz kann als Verteilnetz betrachtet werden. Im Mittelspannungsnetz sind elektrische Spannungen zwischen 1 kV und 60 kV möglich. Das elektrische Niederspannungsnetz betrifft das Verteilnetz mit elektrischen Spannungen von bis zu 1 kV. Im Niederspannungsnetz sind Teilnehmer über Leitungsstränge an Ortsnetztransformatoren angeschlossen. Mehrere Leitungsstränge können von einem Ortsnetztransformator abzweigen.

Ortsnetztransformatoren koppeln das Niederspannungsnetz mit dem Mittelspannungsnetz. Das Mittelspannungsnetz ist über einen Verteilnetztransformator mit dem Hochspannungsnetz gekoppelt. Der Verteilnetztransformator transformiert die Spannung des Hochspannungsnetzes auf diejenige des Mittelspannungsnetzes. Im Bereich dieses Verteilnetztransformators erfolgt bisher regelmäßig die Regelung der Spannung für die Teilnehmer im Niederspannungsnetz. Hierbei ist es jedoch auch möglich, dass eine solche Spannungsregelung in der Mittelspannungsebene an einem zwischengelagerten Mittelspannungstransformator erfolgt. Beispielsweise kann ein solcher Mittelspannungstransformator an einer zwischengelagerte 30-kV-Ebene angekoppelt sein.

Zur Spannungsregelung wird ein Stufensteller am jeweiligen Transformator, insbesondere am Verteilnetztransformator verwendet. Dieser Stufensteller wird herkömmlich durch Messwerte der Spannung aus der Umspannanlage gesteuert. Dabei erfolgt ein Vergleich der gemessenen Spannung mit einer vorgegebenen Sollspannung und abhängig davon erfolgt eine entsprechende Stufung des Stufenstellers, insbesondere eine Steuerung des Stufenstellers. Je nach Einstellung des Stufenstellers wird eine veränderte Spannung aus dem Verteilnetztransformator in das Mittelspannungsnetz eingespeist. Selbiges erfolgt natürlich auch durch Stufensteller an zwischengelagerten Transformatoren innerhalb der Mittelspannungsebene. Dabei können so genannte Mittelspannungsregler zum Einsatz kommen.

Eine Optimierung der Einstellung der Spannung in der Mittelspannungsebene kann dadurch erzielt werden, dass eine so genannte Weitbereichsregelung eingesetzt wird. Bei dieser Weitbereichsregelung werden zusätzlich zu dem in der Umspannanlage gemessenen Spannungswerte auch noch solche Spannungswerte verwendet, die in dem Verteilnetz, insbesondere dem Mittelspannungsnetz gemessen werden. Hierbei erfolgt die Messung innerhalb des Mittelspannungsnetzes an wenigen jedoch räumlich entfernt von der Umspannanlage angeordneten Punkten. Die entfernt von der Umspannanlage gemessenen Werte werden per Datenfernübertragung an den Stufensteller bzw. eine diesem zugeordnete Steuerschaltung in der Umspannanlage übertragen. Die Datenfernübertragung kann mit herkömmlichen Methoden, beispielsweise mittels Mobilfunk, Bündelfunk oder dergleichen erfolgen. Die gesammelten Messwerte, also die lokal ermittelten Spannungswerte werden verwendet, um den Stufensteller an dem Verteilnetztransformator einzustellen. Dabei können die gesammelten Werte gemittelt oder in sonstiger Weise ausgewertet werden, und abhängig von der gemeinsamen Auswertung des gesammelten Werte erfolgt eine Einstellung des Stufenstellers. Dies erlaubt es, in Mittelspannungsnetzen mit vielen dezentralen Erzeugern eine besser angepasste Spannungsregelung zu erzielen. Insbesondere ist die Berechnung des Spannungsprofils in der Mittelspannungsebene durch die zusätzlichen dort gemessenen Spannungsmesswerte optimiert und die Einhaltung der Spannungsbänder kann leichter erfolgen. Dies führt zu einem verringerten Netzausbaubedarf beim Anschluss von zusätzlichen dezentralen Erzeugungsanlagen. EP2683048 A1 zeigt ein Verfahren entsprechend des einleitenden Teils von Anspruch 1.

Aufwändig bei der Weitbereichsregelung ist jedoch die Erfassung der Messwerte in der Mittelspannung. Die hierfür zu implementierende Messtechnik ist teuer und in der Regel zu groß, um in dem Gehäuse eines Ortsnetztransformators untergebracht zu werden.

Aus diesem Grunde lag dem Gegenstand die Aufgabe zu Grunde, eine verbesserte Netzbeobachtbarkeit als auch Netzsteuerung unter Verwendung von Messtechnik zu ermöglichen, welche besonders einfach in das elektrische Verteilnetz integriert werden kann.

Diese Aufgabe wird gegenständlich durch ein Verfahren nach Anspruch 1 und durch ein System nach Anspruch 11 gelöst.

Es ist erkannt worden, dass die für die Netzbeobachtbarkeit als auch die Spannungsregelung notwendigen Messwerte der Mittelspannungsebene niederspannungsseitig erfasst werden können.

Die niederspannungseitig erfassten Messwerte können besonders einfach und mit einem weiteren Nutzen für die Allgemeinheit dadurch erfasst werden, dass Ladestationen für Elektrofahrzeuge einen Zusatznutzen erbringen. Herkömmliche Ladestationen für Elektrofahrzeuge weisen Ladetechnik zum Laden von Elektrofahrzeugen auf. Diese Ladetechnik ist in der Regel in einem Gehäuse untergebracht. Ein wesentliches Element der Ladetechnik ist die in der Regel geeichte Messeinrichtung zur Erfassung der elektrischen Energie, die zwischen Verteilnetz und Elektrofahrzeug ausgetauscht wurde. Das heißt, dass die üblicherweise in den Ladestationen verbaute Messeinrichtung dazu eingerichtet ist, die elektrische Energie, die mit dem Fahrzeug ausgetauscht wird, zu erfassen.

Gegenständlich wird nun vorgeschlagen, dass in diesen Ladestationen eine weitere, von dieser ersten Messeinrichtung getrennt arbeitende zweite Messeinrichtung angeordnet wird. Das heißt, dass die zweite Messeinrichtung in dem Gehäuse der Ladestation in dem auch die erste Messeinrichtung untergebracht ist, eingebaut ist. Die zweite Messeinrichtung misst eine elektrische Größe des Verteilnetzes. Wesentlich ist dabei, dass die zweite Messeinrichtung die elektrische Größe des Verteilnetzes unabhängig von einem Ladevorgang eines Elektrofahrzeugs misst. Somit dient die zweite Messeinrichtung zur Erfassung von elektrischen Größen des Verteilnetzes, welche im Wesentlichen unabhängig von den elektrischen Größen ist, welche von der ersten Messeinrichtung gemessen wird.

Hierbei ist die Messeinrichtung zumindest in Teilen in dem Gehäuse der Ladestation angeordnet, da insbesondere Messspulen und/oder Stromzangen auch außerhalb des Gehäuses, beispielsweise in unmittelbarer Nähe eines Kabels des Verteilnetzes, angeordnet sein können. Die für die Messeinrichtung jedoch wesentlichen elektronischen Baugruppen sind innerhalb des Gehäuses angeordnet. Dabei sind zumindest diejenigen Baugruppen innerhalb des Gehäuses angeordnet, die die physikalisch erfassten Messwerte in datentechnisch verarbeitbare Messwerte, insbesondere eine Ist-Größe umwandeln.

Um mit Hilfe der gemessenen Messwerte des Verteilnetzes die Netzbeobachtbarkeit als auch die Spannungsregelung zu ermöglichen, wird zusätzlich vorgeschlagen, dass die von der gemessenen elektrischen Größe abhängige Ist-Größe an eine von der Ladestation räumlich getrennt angeordnete Zentrale fernübertragen wird. Die gemessene elektrische Größe kann unter Umständen auch nur mittelbar Rückschluss auf die Ist-Größe erlauben. So ist es beispielsweise möglich, in elektrischer Nähe zu einem Ortsnetztransformator die elektrische Spannung des Niederspannungsnetzes zu messen und diese gemessene elektrische Größe umzurechnen in eine Spannung des Mittelspannungsnetzes am Ortsnetztransformator auf der Seite des Mittelspannungsnetzes. Mit Informationen über die Art des Ortsnetztransformators zusammen mit der gemessenen elektrischen Größe, die niederspannungseitig erfasst wird, kann eine Ist-Größe, welche die Spannung im Mittelspannungsnetz repräsentiert, errechnet werden.

Die Ist-Größe wird von der Ladestation, insbesondere durch eine in der Ladestation angeordnete Kommunikationseinrichtung an die Zentrale übermittelt. Die Zentrale kann dabei beispielsweise räumlich am Verteilnetztransformator, insbesondere in der Umspannungsanlage zwischen Hochspannungsnetz und Mittelspannungsnetz angeordnet sein. Die Zentrale kann in Wirkverbindung mit einem Stufensteller oder einem anderen Spannungsregler stehen. Die gemessenen Ist-Größen von verschiedenen Ladestationen werden in der Zentrale verarbeitet. Dabei werden die gemessenen Ist-Größen bewertet und abhängig von der Bewertung wird ein Ergebnis ausgegeben. Die Bewertung kann eine Mittelung oder gewichtete Mittelung der Ist-Wert sein. Abhängig von den Ist-Werten kann festgestellt werden, wie hoch die durch den Stufensteller oder Spannungsregler beeinflusste Ausgangsspannung des Transformators oder Reglers sein muss, um innerhalb des Verteilnetzes möglichst großflächig ein gefordertes Spannungsband einzuhalten. Die gemessene Ist-Größe kann mit anderen gemessenen Ist-Größen verglichen werden. Aus dem Vergleich und/oder der Bewertung kann eine optimierte Stellgröße für den Spannungsregler / Stufensteller berechnet werden. Die Bewertung der elektrischen Ist-Größe kann dazu herangezogen werden, die Spannung in der Mittelspannungsebene zu regeln, insbesondere zur Ansteuerung des Stufenstellers. Je nach dem welche elektrische Größe gemessen wurde, ist es auch möglich, Leistungsflüsse innerhalb des Mittelspannungsnetzes zu berechnen, insbesondere abzuschätzen, wobei die Schätzung durch die zusätzlichen Messwerte gegenüber herkömmlichen Schätzungen verbessert wird.

Mit Hilfe der Ladestationen, die in der Niederspannung angeschlossen sind, ist es möglich, Spannungswerte aus der Mittelspannung für eine Weitbereichsregelung zur Verfügung zu stellen. Hierbei ist es vorteilhaft, wenn die Ladestationen in der Niederspannungsebene elektrisch nah an dem Ortsnetztransformator installiert sind. Die zweite Messeinrichtung in der Ladestation ermittelt niederspannungsseitig vorzugsweise Spannungswerte, die jedoch aufgrund der elektrischen Nähe zu dem Ortsnetztransformator auf die Mittelspannungsebene umgerechnet werden können. Somit kann niederspannungsseitig unter Verwendung geeigneter Umrechnungsverfahren ein mittelspannungsseitiger Spannungswert ermittelt werden. Der ggf. fernübertragene Wert dient dann zur Beobachtung des Mittelspannungsnetzes als auch zur Spannungsregelung, insbesondere zur Weitbereichsregelung.

Mit Hilfe des gegenständlichen Verfahrens ist es möglich, bestehende Elemente der Weitbereichsregelung, die ohnehin bereits vorhanden sind, zu optimieren. Hierbei ist es lediglich notwendig, die an den niederspannungsseitigen Ladestationen erfassten Spannungs-Ist-Werten in Spannngs-Ist-Werte der Mittelspannungsebene zu überführen und zentral zu bewerten sowie entsprechende Regelanweisungen für den Stufensteller / Spannungsregler hieraus abzuleiten.

Die Ladestation dient der Messwerterfassung des Verteilnetzes unabhängig von ihrer Funktion der Bereitstellung von elektrischer Energie für Elektrofahrzeuge. Ist sie in unmittelbarer Nähe zu einer vorhandenen Ortsnetzstation aufgestellt, kann der Einfluss des Niederspannungsnetzes auf die elektrische Größe, insbesondere auf die Spannung, die mit der zweiten Messeinrichtung niederspannungsseitig gemessen wird, vernachlässigt werden. Daher ist es möglich, aus der niederspannungsseitig ermittelten elektrischen Größe, insbesondere der Spannung zusammen mit den technischen Daten des vorgelagerten Ortsnetztransformators einen Spannungs-Ist-Wert der Mittelspannung am Ortsnetztransformator zu berechnen. Da die hierfür notwendige Messtechnik außerhalb des Gehäuses des Ortsnetztransformators in der Ladestation angeordnet ist, können Platzprobleme in Ortsnetzstationen vermieden werden.

Vorzugsweise kann zu einer exakten Bestimmung des Spannungs-Ist-Wertes der Mittelspannung zusätzlich der niederspannungsseitige Strom aus der Ortsnetzstation erfasst werden. Dieser Stromsensor wäre dann in der Ortsnetzstation eingebaut, bringt aber in der Regel keine Platzprobleme mit sich. Die maßgebliche Mess- und/oder Kommunikationstechnik verbleibt außerhalt des Ortsnetzstation, in einer in räumlicher und/oder elektrischer Nähe hierzu aufgebauten Ladestation.

Die zweite Messeinrichtung kann daher neben der Erfassung der elektrischen Spannung beispielsweise auch Stromsensoren aufweisen, die dann aber physikalisch außerhalb des Gehäuses der Ladestation angeordnet sein können. Die physikalisch ermittelten Messwerte können von dort in die Messeinrichtung übertragen werden. Es können beispielsweise Stromzangen und/oder Rogowski Spulen zum Einsatz kommen, mit deren Hilfe die Stärke des Stroms durch den Transformator gemessen werden kann. Die gemessenen Werte werden durch die in der Ladestation eingebaute Messtechnik, insbesondere die zweite Messeinrichtung ausgewertet.

Ein weiterer Vorteil in der gegenständlichen Lösung ist es, dass die ohnehin zur Weitbereichsregelung und zur Netzbeobachtbarkeit notwendige Messtechnik besonders einfach in Ladestationen untergebracht werden kann, die dann für die Öffentlichkeit den Zusatznutzen bieten, auch als Ladestation für Elektrofahrzeuge zu dienen.

Gemäß einem Ausführungsbeispiel wird vorgeschlagen, dass abhängig von der Bewertung des Ist-Werte eine Einstellung der Spannung des Verteilnetzes, insbesondere eine Einstellung einer Mittelspannung eines Mittelspannungsnetzes, insbesondere an einer Umspanneinrichtung zwischen einem Hochspannungsnetz und einem Mittelspannungsnetz bewirkt wird. Wie eingangs bereits erläutert, ist die Weitbereichsregelung häufig in der Mittelspannungsebene angeordnet. Ein Stufensteller, der am Verteilnetztransformator, insbesondere im Bereich der Umspanneinrichtung angeordnet ist, dient zur Einstellung der Spannung, des Mittelspannungsnetzes an der Umspanneinrichtung. Abhängig von den elektrischen Leistungsflüssen innerhalb des Mittelspannungsnetzes kann sich diese Spannung jedoch an den Leitungssträngen verändern und entfernt von der Umspanneinrichtung gegebenenfalls außerhalb eines erlaubten Spannungsbandes liegen. In diesem Fall müsste der Spannungsregler, insbesondere der Stufensteller, die Spannung der Mittelspannung am Verteilnetztransformator so verändern, dass möglichst über den gesamten Leitungsstrang das zulässige Spannungsband eingehalten wird. Dies kann dadurch erreicht werden, dass die gegenständlichen Ladestationen entfernt von der Umspanneinrichtung Messwerte über den Zustand des Mittelspannungsnetzes, insbesondere Spannungsmesswerte bereitstellen, die zur Einstellung des Stufenstellers dienen.

Auch ist es möglich, dass niederspannungsseitig, entfernt von dem Ortsnetztransformator angeordnete und angeschlossene Ladestationen zur Einstellung der Spannung des Niederspannungsnetzes genutzt werden. Hierbei kann beispielsweise eine Ladestation innerhalb eines Niederspannungsnetzes, vorzugsweise entfernt vom dem Ortsnetztransformator die Niederspannung erfassen und diese an einen Spannungssteller an dem Ortsnetztransformator zwischen dem Mittelspannungsnetz und dem Niederspannungsnetz übertragen. Dort kann der gemessene Spannungswert dazu verwendet werden, die Spannung des Niederspannungsnetzes unmittelbar am Ortsnetztransformator einzustellen, um innerhalb eines jeweils an einen Ortsnetztransformator angeschlossenen Niederspannungsnetzes das erlaubte Spannungsband einzuhalten.

Wie bereits erwähnt ist es vorteilhaft, wenn die gemessene elektrische Größe in einem Niederspannungsnetz gemessen wird. Somit ist nur Messtechnik notwendig, die für Niederspannung ausgelegt ist, welche erheblich kostengünstiger ist als solche für Mittelspannung. Wenn die Messung elektrisch in der Nähe zu dem Ortsnetztransformator erfolgt, kann diese dazu verwendet werden, die gemessene Größe aus der Niederspannungsebene in die Mittelspannungsebene umzurechnen um so einen Rückschluss auf die elektrische Größe der Mittelspannung zu ziehen.

Hierbei ist es vorteilhaft wenn die Ladestation in elektrischer Nähe zu dem Ortsnetztransformator angeordnet ist. Elektrische Nähe kann vorzugsweise so verstanden werden, dass der Einfluss der Spannungsveränderung innerhalb des Niederspannungsnetzes am Punkt der Messung durch die zweite Messeinrichtung unberücksichtigt bleiben kann. Insbesondere kann die elektrische Größe räumlich einen Ortsnetztransformator zugeordnet erfasst werden. Hierbei ist es beispielsweise möglich, dass die Ladestationen der erste Teilnehmer eines oder aller niederspannungsseitigen Leitungsstrangs / -stränge ist, der / die an den Ortsnetztransformator angeschlossen ist / sind. Ausgehend von dem Ortsnetztransformator können mehrere Leitungsstränge abzweigen, die den Ortsnetztransformator mit Teilnehmern verbinden. Innerhalb eines jeden dieser Leitungsstränge ist ein erster Teilnehmer derjenige Teilnehmer, der mit der kürzesten Leitungslänge in dem Leitungsstrang am Ortsnetztransformator angeschlossen ist. Vorzugsweise ist dies die gegenständliche Ladestation.

Auch kann eine elektrische Nähe zu dem Ortsnetztransformator so verstanden werden, dass die Leitungslänge zwischen dem Ortsnetztransformator und der Ladestation weniger als 10 % der Gesamtlänge der Leitung des Leitungsstrangs beträgt.

Darüber hinaus ist es auch möglich, dass die Länge der Leitung zwischen dem Ortsnetztransformator und der Ladestation kürzer ist als jede andere Leitungslänge zwischen dem Ortsnetztransformator und einem daran angeschlossenen Teilnehmer. Somit ist die Ladestation derjenige Teilnehmer, der mit der kürzesten Leitung von allen Teilnehmern innerhalb eines Ortnetzes an den Ortsnetztransformator angeschlossen ist.

In Kenntnis der Niederspannung als auch der Dimensionierung des Ortsnetztransformators ist es möglich, aus der niederspannungsseitig gemessenen elektrischen Größe eine mittelspannungsseitige Ist-Größe zu errechnen. Hierbei wird gegenständlich vorgeschlagen, dass die aus der gemessenen Ist-Größe berechnete Ist-Größe eine elektrische Größe eines Mittelspannungsnetzes, vorzugsweise die Spannung des Mittelspannungsnetzes an dem Ortsnetztransformator repräsentiert.

Die elektrische Größe wird gegenständlich vorzugsweise nach Betrag und Phase ermittelt. Hierbei ist es beispielsweise möglich, dass sowohl Betrag als auch Phase für ein dreiphasiges Netz erfasst wird. Hierbei kann beispielsweise Betrag/Phase für alle drei Außenleiterspannungen bestimmt werden. Auch ist es möglich, jeweils die Leiter-Erdspannung zwischen einer Phase und dem Nullleiter zu messen. Dies erfolgt vorzugsweise in dem Niederspannungsnetz. Auch kann eine zusätzliche elektrische Größe erfasst werden. Hierbei kann beispielsweise eine Strommessung erfolgen. Diese erfolgt gegenständlich vorzugsweise auch dreiphasig. Dabei kann gegenständlich sowohl Betrag als auch Phase ermittelt werden. Hierbei ist es möglich, den gesamten vom Transformator in ein Niederspannungsnetz eingespeisten Strom zu erfassen. Dieser kann als Transformatorstrom bezeichnet werden.

Gemäß einem Ausführungsbeispiel wird vorgeschlagen, dass mit der zweiten Messeinrichtung eine elektrische Stromstärke zumindest einer Phase erfasst wird. Dabei ist es beispielsweise möglich, dass die Stromstärke niederspannungsseitig, vorzugsweise am Abgang des Ortsnetztransformators erfasst wird. In Kenntnis der niederspannungsseitigen elektrischen Stromstärke als auch der niederspannungsseitig erfassten Spannung ist es möglich, die Spannung in der Mittelspannung am Ortsnetztransformator zu berechnen. Die elektrische Stromstärke kann mittels Rogowski-Spulen oder Stromzangen erfasst werden. Die physikalisch außerhalb der Ladestation erfassten Messwerte werden leitungsgebunden an die in der Ladestation angeordnete zweite Messeinrichtung übertragen.

Darüber hinaus ist es beispielsweise möglich, dass auch eine Stromstärke mittelspannungsseitig erfasst und für die Übertragung in die Zentrale in der Ladestation verarbeitet wird. Somit ist es möglich die Stromflüsse im Mittelspannungsnetz zu überwachen. Auch diese elektrische Stromstärke kann beispielsweise mittels Rogowski-Spulen oder Stromzangen erfasst werden. Die physikalisch außerhalb der Ladestation erfassten Messwerte werden vorzugsweise leitungsgebunden an die in der Ladestation angeordnete zweite Messeinrichtung übertragen, dort verarbeitet, insbesondere in datentechnisch verarbeitbare Messwerte gewandelt und an die Zentrale übermittelt. Die primärseitig des Ortsnetztransformator gemessenen mittelspannungsseitige Stromstärke kann dazu genutzt werden, Leistungsflüsse in der Mittelspannungsebene zu berechnen.

Es wird vorgeschlagen, dass die gemessene elektrische Größe zumindest eine aus einer elektrischen Spannung zumindest einer Phase, einer elektrische Stromstärke zumindest einer Phase, einer Wirk- und/oder Blind- und/oder Scheinleistung an zumindest einer Phase und/oder einem Phasenwinkel zwischen Strom und/oder Spannung zwischen zumindest zwei Phasen ist. Diese Erfassung kann niederspannungsseitig als auch mittelspannungsseitig erfolgen, wobei bevorzugt ist, dass die elektrische Spannung niederspannungsseitig erfasst wird. Die elektrischen Größen können, wie bereits erläutert, sowohl nach Betrag als auch nach Phase erfasst werden.

Gemäß einem Ausführungsbeispiel wird vorgeschlagen, dass abhängig von der Bewertung der in der Zentrale empfangenen Ist-Größen ein Stufensteller eines Verteilnetztransformators in dem Mittelspannungsnetz betrieben wird. Das Betreiben erfolgt derart, dass durch Veränderung der Spannung an dem Stufensteller eine Verletzung eines zulässigen Spannungsbandes innerhalb der Mittelspannungs- und/oder Niederspannungsebene vermieden wird. Zulässige Spannungsbänder sind z.B. für Teilnehmer in der Niederspannungsebene gemäß DIN-EN 50160 festgelegt. In den üblichen Fällen, in denen Ortsnetztransformatoren mit festen Übersetzungsverhältnissen zwischen Mittelspannung und Niederspannung eingesetzt werden, bedingt die Notwendigkeit der Einhaltung gewisser Grenzen, z.B. der genannten Spannungsbänder, in der Niederspannung die Einhaltung entsprechender Grenzen in der Mittelspannung.

Auch ist es möglich, dass abhängig von der Bewertung ein Stufensteller zwischen einem Hochspannungsnetz und dem Mittelspannungsnetz als auch in dem Mittelspannungsnetz selbst, beispielsweise ein Stufensteller an zwischengelagerten Transformatoren oder Reglern, z. B. auch 20/20-kV- oder 30/10-kV-Transformatoren, betrieben wird. Auch ist es möglich, dass abhängig von der Bewertung ein Mittelspannungsregler innerhalb des Mittelspannungsnetzes oder ein Niederspannungsregler am Ortsnetztransformator oder innerhalb des Niederspannungsnetzes betrieben wird.

Durch die dezentrale Erzeugung elektrischer Leistung ist die Spannungs- und Leistungsmessung je Mittelspannungsabgang in einer 110 kV Umspannanlage nicht mehr ausreichend, um mit Hilfe von Leistungsflussrechnungen zu jeder Zeit und für jeden Ort im Netz die aktuelle Belastung ausreichend gut abschätzen zu können. Herkömmlich wurde dies jedoch praktiziert. Es wurde lediglich eine Spannungs- und Leitungsmessung pro Abgang an einem Verteilnetztransformator durchgeführt und in Kenntnis der Netztopologie des Mittelspannungsnetzes für jeden Strang eine Leistungsflussrechnung durchgeführt. Durch dezentrale Erzeugung kann es jedoch innerhalb eines Leitungsstrangs zu Leistungsflüssen kommen, die keine Auswirkung auf die Spannung am Mittelspannungsabgang der Umspannanlage haben. Diese Leistungsflüsse beeinflussen jedoch die Spannung innerhalb eines Leitungsstranges und können somit zu einer Verletzung des zulässigen Spannungsbandes beitragen. Daher sind zusätzliche Messpunkte im Mittelspannungsnetz erforderlich, um die Netzbeobachtbarkeit wiederherzustellen.

Mit Hilfe der gegenständlichen Messung ist es möglich, durch den Einsatz von herkömmlichen Ladestationen zusätzliche Messpunkte bereitzustellen, und dadurch die Netzbeobachtbarkeit zu erhöhen. Mit Hilfe der ladestationsseitig erfassten Messwerte ist es möglich, die an der Umspannanlage vorgenommene Leistungsmessung je Mittelspannungsabgang durch Spannungsmesswerte aus dem Mittelspannungsnetz zu ergänzen. Diese Spannungsmesswerte sind die Ist-Größen, z.B. Spannungs- und gegebenenfalls Stromflussmesswerte, welche aus den physikalisch gemessenen elektrischen Größen, die niederspannungsseitig erfasst werden, errechnet worden sind. Durch diese Ergänzung ist es möglich, Leistungsflüsse im gesamten Mittelspannungsnetz besser abzuschätzen, da nicht nur die Leistungsflüsse an dem Mittelspannungsabgang in der Umspannanlage bekannt sind, sondern auch solche, die innerhalb des Mittelspannungsnetzes vorliegen. Die Netzbeobachtbarkeit wird besser und/oder der Netzbetrieb wie ein Netzausbau kann gezielter erfolgen.

Mit Hilfe der gegenständlichen Erfassung der elektrischen Größe ist es auch möglich, eine Weitbereichsreglung in der Niederspannungsebene aufzubauen. Hierfür ist ein Spannungsregler an oder in der Nähe des Ortsnetztransformators notwendig, welcher mit Hilfe von Informationen aus dem Niederspannungsnetz gespeist und betrieben wird. Der Ortsnetztransformator koppelt die Mittelspannungsebene mit der Niederspannungsebene. Ein Niederspannungsregler oder ein regelbarer Ortsnetztransformator kann dafür sorgen, dass die Spannung am Abgang eines Leitungsstrangs in der Niederspannungsebene eingestellt wird. In Kenntnis von Spannungswerten innerhalb der Leitungsstränge ist es möglich, diese Spannungswerte so einzustellen, dass zulässige Spannungsbänder über den gesamten Leitungsstrang eingehalten werden. Hierdurch ist es möglich, Ladestationen einer Doppelnutzung zuzuführen, nämlich zum Einen zur Bereitstellung von elektrischer Energie für Elektrofahrzeuge und zum Anderen als Messeinrichtung für die Planung, den Bau und/oder den Betrieb von Verteilnetzen der Mittel- und Niederspannungsebene.

Die Übertragung der Ist-Werte an eine Zentrale erfolgt gegenständlich zwischen der Ladestation bzw. einer darin eingebauten Kommunikationseinrichtung und der jeweiligen Steuereinrichtung für den Spannungsregler, insbesondere den Stufensteller. Dabei ist eine Funkübertragung oder eine drahtgebundene Übertragung, beispielsweise mittels Powerline möglich. Insbesondere ist eine Übertragung über ein Weitverkehrsnetz möglich.

Die Steuereinrichtung muss nicht unmittelbar an dem Stufensteller oder dem Spannungsregler an der Ortnetzstation angeordnet sein. Es ist möglich, dass die Ist-Größe zunächst an die Steuereinrichtung übermittelt wird, die sowohl von der Ladestation als auch von der Spannungsreglung räumlich getrennt sein kann. Anschließend kann ein Steuersignal für den Spannungsregler bzw. den Stufensteller von dort an diesen übertragen werden.

Ein weiterer Aspekt ist eine Ladestation für Elektrofahrzeuge. Die Ladestation ist herkömmlich ausgestattet, in dem sie elektrisch mit einem Niederspannungsnetz verbunden ist. Innerhalb der Ladestation ist eine erste Messeinrichtung angeordnet, um mit einem Elektrofahrzeug ausgetauschte elektrische Energie zu erfassen. Darüber hinaus ist gegenständlich eine zweite Messeinrichtung in dem Gehäuse der Ladestation zumindest in Teilen angeordnet. Die Auswertung der Messwerte und/oder die Berechnungen kann dabei in dem gleichen Prozessor, Mikroprozessor bzw. Rechner innerhalb der Ladestation erfolgen, der auch für die Verarbeitung der Daten der Ladung von Elektrofahrzeugen genutzt wird. Hierbei sind aber verschiedene Prozesse bzw. Applikationen im Einsatz, welche die jeweils Messwerte jeweils unterschiedlich verarbeiten. Die zweite Messeinrichtung kann von der ersten Messeinrichtung getrennt sein. Hierbei kann eine logische Trennung von Vorteil sein, so dass ein Prozessor zwei Prozesse ausführt. Einen für die erste Messeinrichtung, einen für die zweite Messeinrichtung. Diese zweite Messeinrichtung misst unabhängig von einem Ladevorgang eines Elektrofahrzeugs zumindest eine elektrische Größe des Verteilnetzes. Dies ist vorzugsweise die Spannung des Verteilnetzes, insbesondere des Niederspannungsnetzes. Die gemessene Größe bzw. eine hiervon abhängige Ist-Größe wird mittels einer Übertragungseinrichtung von der Ladestation an eine räumlich davon getrennt angeordnete Zentrale fernübertragen.

Ein weiterer Aspekt ist ein System nach Anspruch 12, bei dem eine Ladestation in elektrischer Nähe zu dem Ortsnetztransformator angeordnet ist.

Die zuvor genannten Verfahren können auch als Computerprogramm oder als auf einem Speichermedium gespeichertes Computerprogramm realisiert werden. Hierbei kann ladestationsseitig und/oder zentralseitig ein Mikroprozessor zur Durchführung der jeweiligen Verfahrensschritte durch ein Computerprogramm geeignet programmiert sein.

Nachfolgend wird der Gegenstand anhand einer ausführungsbeispielzeigenden Zeichnung näher erläutert. In der Zeichnung zeigen:
- Fig. 1: ein System zur Weitbereichsreglung;
- Fig. 2: ein System zur Weitbereichsreglung in der Mittelspannungsebene;
- Fig. 3: ein System zur Weitbereichsreglung in der Niederspannungsebene;
- Fig. 4: eine schematische Ansicht einer gegenständlichen Ladestation.

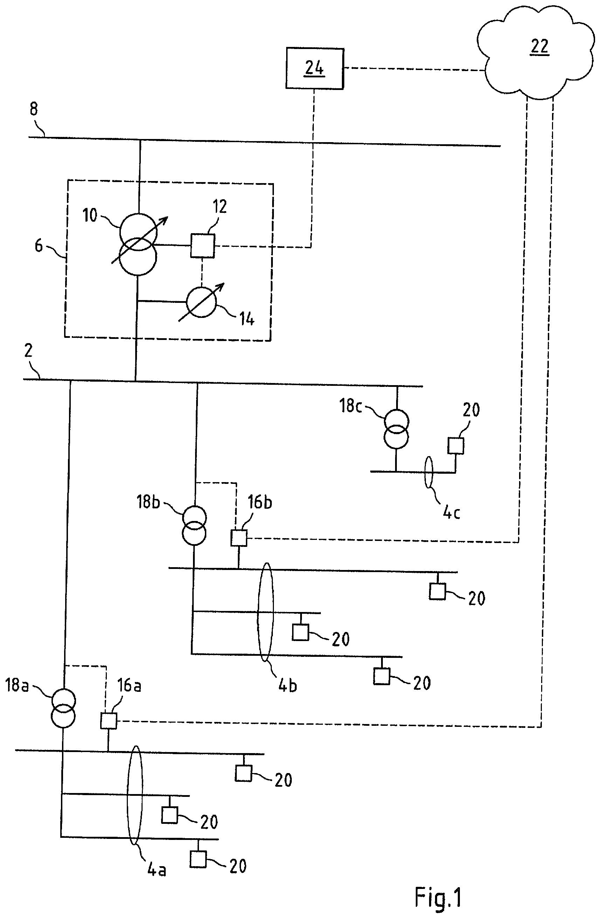

Figur 1 zeigt ein elektrisches Verteilnetz. Dieses ist gebildet aus einem Mittelspannungsnetz 2 und Niederspannungsnetzen 4a - c. Das Mittelspannungsnetz 2 ist über eine Umspanneinrichtung 6 an ein Hochspannungsnetz 8 angeschlossen. Dass Mittelspannungsnetz hat einen Spannungsbereich zwischen 1 kV und 60 kV, das Hochspannungsnetz hat einen Spannungsbereich über 60 kV und die Niederspannungsnetze 4a - c liegen in einem Spannungsbereich bis 1 kV.

Im Bereich der Umspanneinrichtung 6 ist ein Mittelspannungstransformator 10, der auch als Verteilnetztransformator verstanden werden kann, angeordnet. Über den Transformator 10 wird die Spannung des Hochspannungsnetzes 8 auf die Spannungsebene des Mittelspannungsnetzes 2 heruntergespannt. Ferner befindet sich im Bereich der Umspanneinrichtung 6 ein Stufensteller 12 sowie eine Spannungsmesseinrichtung 14. Mit Hilfe der Spannungsmesseinrichtung 14 kann die Ausgangsspannung am Mittelspannungstransformator 10 gemessen werden. Mit dieser Information kann der Stufensteller 12 angesteuert werden, um die Ausgangsspannung des Mittelspannungstransformators 10 entsprechend einzustellen. Dies erfolgt, um die einzelnen Abgänge des Mittelspannungsnetzes 2 in einem gewünschten Spannungsband zu halten.

Aufgrund von dezentraler Erzeugung ist jedoch die Spannungsmessung mittels der Spannungsmesseinrichtung 14 am Mittelspannungstransformator 10 nicht mehr ausreichend, die Einhaltung von gewünschten Spannungsbändern zu vertretbaren Kosten und bei vertretbarem Aufwand zu garantieren. Aufgrund von entlang der Leitungsstränge des Mittelspannungsnetzes 2 fließender Leistungsflüsse, die durch dezentrale Einspeisung bewirkt werden können, ist die Spannung am Ausgang des Verteilnetztransformators 10 nicht stets aussagekräftig darüber, wie sich die Spannung entlang der Leitungsstränge des Mittelspannungsnetzes 2 verhält.

Um über das gesamte Mittelspannungsnetz 2 möglichst die Einhaltung des erlaubten / gewünschten Spannungsbandes gewährleisten zu können, ist es notwendig, entfernt von dem Mittelspannungstransformators 10 Spannungsmesswerte des Mittelspannungsnetzes 2 zu erfassen. Hierfür werden gegenständlich niederspannungsseitig angeschlossene Ladestationen 16a und 16b vorgeschlagen.

Das Mittelspannungsnetz 2 ist entlang seiner Verteilstränge über Ortsnetztransformatoren 18a - c an die Niederspannungsnetze 4a - c angebunden. Die Ortsnetztransformatoren 18a - c transformieren die Spannung des Mittelspannungsnetzes 2 auf die Spannung des Niederspannungsnetzes 4a-c.

Gegenständlich wird vorgeschlagen, dass in elektrischer Nähe zu einem Ortsnetztransformator 18 eine Ladestation 16 angeordnet sein kann. Für eine ausreichend gute Weitbereichsreglung ist es nicht zwingend, dass an jedem Ortsnetztransformator 18 unmittelbar eine Ladestation 16 angeordnet ist. Es reichen einige wenige Messpunkte aus, so dass, wie in Figur 1 beispielhaft dargestellt ist, nicht an allen Ortsnetztransformatoren 18a - c Ladestation 16a - b angeordnet sein müssen.

Die Ladestation 16a ist an den Ortsnetztransformator 18a im Niederspannungsnetz 4a angeschlossen. Die Leitungslänge zwischen dem Ortsnetztransformator 18a und der Ladestation 16a ist kürzer, als jede andere Leitungslänge zwischen dem Ortsnetztransformator 18a und einem Verbraucher 20. Das heißt, dass die Ladestation 16a unter allen Teilnehmern des Niederspannungsnetzes 4a dem Ortsnetztransformator 18a am nächsten ist.

Mit Hilfe der Ladestation 16a ist es möglich, insbesondere an alle drei Phasen des Niederspannungsnetzes 4a Spannungsmesswerte zu erfassen. Diese Spannungsmesswerte sind, da sie elektrisch nah an dem Ortsnetztransformator 18a erfasst werden, noch nicht durch die Teilnehmer 20 des Niederspannungsnetzes 4a wesentlich beeinflusst. Mit Hilfe der Spannungsmesswerte der Ladestation 16a können daher Rückschlüsse auf die Eingangsspannung der Mittelspannungsebene des Mittelspannungsnetzes 2 am Ortsnetztransformator 18a gezogen werden können. In Kenntnis des elektrischen Aufbaus des Ortsnetztransformators 18a ist es möglich, aus den gemessenen Spannungswerten, die niederspannungsseitig erfasst werden, auf eine Ist-Größe der Spannungswerte am Eingang des Ortsnetztransformators 18a zu schließen.

Gegebenenfalls wird für eine höhere Genauigkeit der Rückrechnung auf die Mittelspannung auch die Stromstärke, also der der Stromfluss durch den Ortsnetztransformator niederspannungsseitig ebenfalls erfasst. Hierzu kann mittels z.B. einer Messspule (Stromzange) sekundärseitig des Ortsnetztransformators 18a beispielsweise die Stromstärke auf jeder Phase gemessen werden.
Mit dieser zusätzlichen Strominformation, die sekundärseitig des Ortsnetztransformators 18a erfasst wurde, ist es möglich, elektrischen Größen des Mittelspannungsnetzes 2 am Eingang des Ortsnetztransformators 18a zu errechnen.

Auch ist es möglich, mittels z.B. einer Messspule (Stromzange) zusätzlich auch mittelspannungsseitig (primärseitig) des Ortsnetztransformators 18a beispielsweise die Stromstärke auf jeder Phase zu messen. Insbesondere ist durch die zusätzliche primärseitige Strommessung eine Berechnung der Leistungsflüsse im Mittelspannungsnetz verbessert, da zusätzliche Messpunkte die Berechnung genauer machen.

Die Ist-Größen werden entweder in der Ladestation 16a verarbeitet oder es werden die gemessenen Werte unmittelbar von der Ladestation 16a über beispielsweise ein Weitverkehrsnetz wie das Internet 22 an eine Zentrale 24 übermittelt.

Mit Hilfe der Ist-Werte kann in der Zentrale 24 eine Bewertung erfolgen, z.B. ein Vergleich mit Soll-Werten, eine Mittelung der Ist-Werte oder dergleichen. Die Zentrale 24 kennt zudem die Netztopologie des Mittelspannungsnetzes 2 und somit lassen sich abhängig von der Ausgangsspannung des Mittelspannungstransformators 10 SollWerte für den Stufensteller errechnen und auf diese Weise die Eingangsspannung an den Ortsnetzstransformatoren 18a - c beeinflussen.

Durch die Zunahme dezentraler Einspeisung kann es jedoch dazu kommen, dass die elektrischen Größen den zulässigen Bereich im Verteilnetz drohen zu über- oder zu unterschreiten. Diese drohende Abweichung ist durch eine Analyse der in der Zentrale 24 empfangenen oder erstellten Ist-Werte erkennbar. Bei einer Abweichung der Ist-Werten über ein gewisses Maß, oder auch bei einer gewichteten Abweichung einer Summe von Ist-Werten von einem bestimmten Maß ist die Zentrale 24 in der Lage, Stellbefehle für den Stufensteller 12 zu erstellen.

So ist es beispielsweise möglich, wenn der Ist-Wert an der unteren Grenze des zulässigen Bereiches liegt, dass der Stufensteller 12 angewiesen wird, die Ausgangsspannung des Verteilnetztransformators 10 für den jeweiligen Netzbereich, der von diesem Transformator gespeist wird, zu erhöhen. Wenn der Ist-Wert knapp unterhalb der oberen Grenze des zulässigen Bereiches liegt, kann der Stufensteller 12 angewiesen werden, die Ausgangsspannung des Verteilnetztransformators 10 für den jeweiligen Netzbereich, der von diesem Transformator gespeist wird, zu senken.

Die in der Zentrale 24 ermittelte Steueranweisung wird drahtlos oder drahtgebunden an den Stufensteller 12 übermittelt, der den Verteilnetztransformator 10 derart beeinflusst, dass die Ausgangsspannungen an den jeweiligen Abgängen in der Mittelspannungsebene 2 veränderbar ist. Abhängig von den Steuerbefehlen erfolgt eine Veränderung der Ausgangsspannung des Verteilnetztransformators 10 durch den Stufensteller 12.

Mit Hilfe der weiteren, beispielsweise von der Ladestation 16b erfassten Ist-Werten ist es möglich, den Zustand des Mittelspannungsnetzes 2 zu erfassen. Darüber hinaus ist es möglich, Leistungsflüsse in Leitungssträngen des Mittelspannungsnetzes 2 anhand der erfassten elektrischen Größen und der daraus ermittelten Ist-Werte an den Eingängen der Ortsnetztransformatoren zu schätzen und somit eine verbesserte Netzbeobachtbarkeit zu ermöglichen.

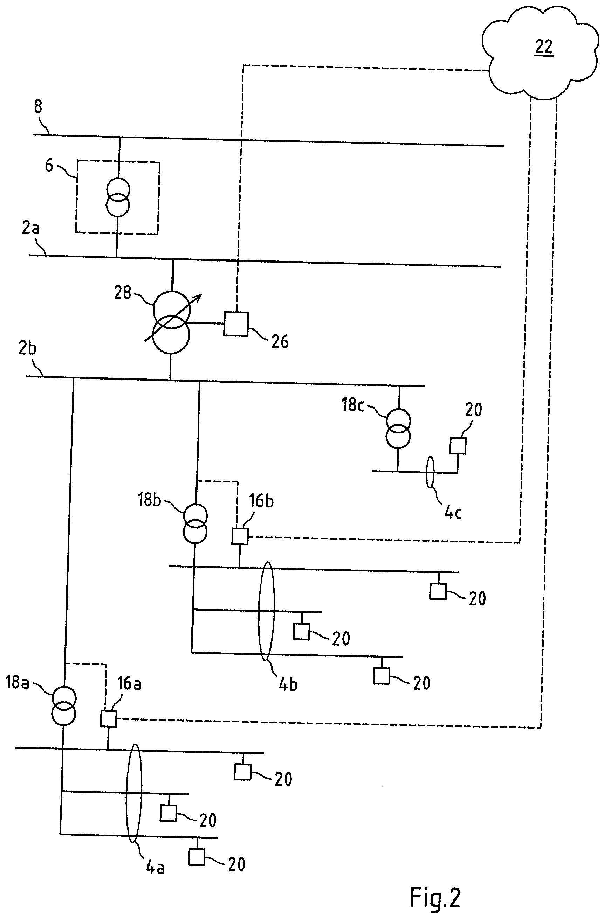

Figur 2 zeigt ein zu der Figur 1 ähnliches Szenario. Hier ist jedoch im Unterschied zu der Figur 1 ein Stufensteller 26 an einem Transformator 28 angeordnet, der zwischen einem Mittelspannungsnetz 2a in einer ersten Spannungsebene und einem Mittelspannungsnetz 2b in einer zweiten Spannungsebene angeordnet ist. Zusätzlich zu dem Stufensteller 26 kann nach wie vor auch der Stufensteller 12 gemäß Figur 1 in der Umspanneinrichtung 6 angeordnet sein.

Die gemäß Figur 1 beschriebenen Elemente können auch hier weiterhin bestehen. Alternativ oder kumulative ist es jedoch auch möglich, dass der Stufensteller 26 entweder über eine Zentrale 24 oder unmittelbar Ist-Werte der Ladestationen 16a und 16b entsprechend der in Figur 1 geschilderten Messung empfängt. Anhand dieser Ist-Werte ist es möglich, dass der Stufensteller 26 die Ausgangsspannung des Mittelspannungstransformators 28 an den jeweiligen Leitungssträngen der Mittelspannungsebene 2b einstellt, so dass sich die Eingangsspannungen an den Ortsnetztransformatoren 18a, 18b innerhalb der gewünschten / erlaubten Werte liegen

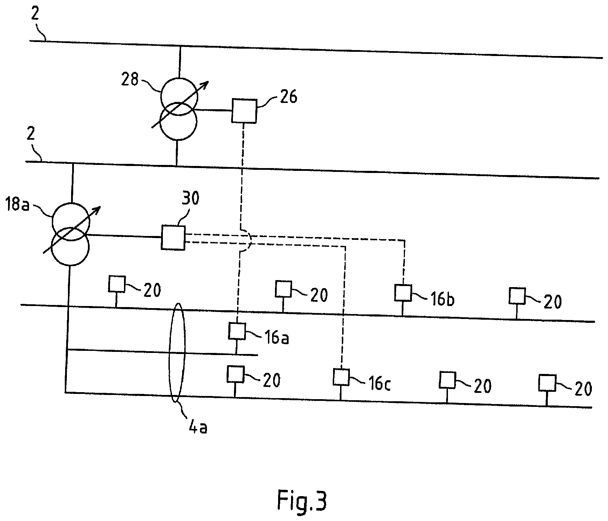

Figur 3 zeigt eine weitere, alternativ oder kumulativ zu den Ausgestaltungen nach Figur 1 und/oder 2 vorzusehende Implementierung eines gegenständlichen Verfahrens. Das Hochspannungsnetz 8 und die Umspanneinrichtung 6 sind einfachheitshalber nicht dargestellt. In der in der Figur 3 dargestellten Variante kann von innerhalb des Niederspannungsnetzes angeordneten Ladestationen 16a - c eine Regelung des Ortsnetztransformators 18a als auch eine Reglung des Mittelspannungstransformators 28 erfolgen.

Hierbei können innerhalb des Niederspannungsnetzes 4a nicht in elektrischer Nähe zum Ortsnetztransformator 18a angeordnete Ladestationen 16b und 16c Spannungsmesswerte eines jeweiligen Leitungsstrangs an eine Regeleinrichtung 30, die mit dem Ortsnetztransformator 18a verbunden ist, übermittelt werden. Mit Hilfe dieser Ist-Werte ist es möglich, die Ausgangsspannung des regelbaren Ortsnetztransformators 18a für die angeschlossenen Leitungsstränge einzustellen, so dass die erlaubten Spannungsbänder auf den jeweiligen Leitungssträngen eingehalten werden. Regelmäßig wirkt die Regelung am Ortsnetztransformator 18a gleichförmig auf alle Leitungsstränge. Es ist aber auch möglich, dass sich ein Spannungsregler nicht amTransformator, sondern in einem Leitungsstrang befindet.

Darüber hinaus kann eine elektrisch nah zum Ortsnetztransformator 18a angeordneter Ladestation 16a ebenfalls die Ausgangsspannung des Ortsnetztransformator 18a messen. Diese Ausgangsspannung kann jedoch, da die Ladestation 16a nah an dem Ortsnetztransformator 18a angeordnet ist, in eine für die Eingangsspannung des Ortsnetztransformators 18a repräsentative Spannung umgerechnet werden. Somit ist mit Hilfe der Spannungsmesswerte der Ladestation 16a ein Bestimmen einer Ist-Größe an der Primärseite des Ortsnetztransformators 18a möglich. Diese Ist-Größe ist zur Bestimmung beispielsweise der Spannung innerhalb des Mittelspannungsnetzes 2 geeignet.

Die Ist-Größe kann von der Ladestation 16a entweder über ein Weitverkehrsnetz oder unmittelbar an den Stufensteller 26 übermittelt werden. Mit Hilfe des Stufenstellers 26 ist es möglich, die Ausgangsspannung(en) sekundärseitig des Mittelspannungstransformators 28 einzustellen, so dass im Mittelspannungsnetz 2 möglichst eine Einhaltung eines erlaubten Spannungsbandes gewährleistet ist. Selbiges kann auch über einen Stufensteller 12 einer Umspanneinrichtung 6 erfolgen, ist jedoch der Einfachheit halber nicht dargestellt.

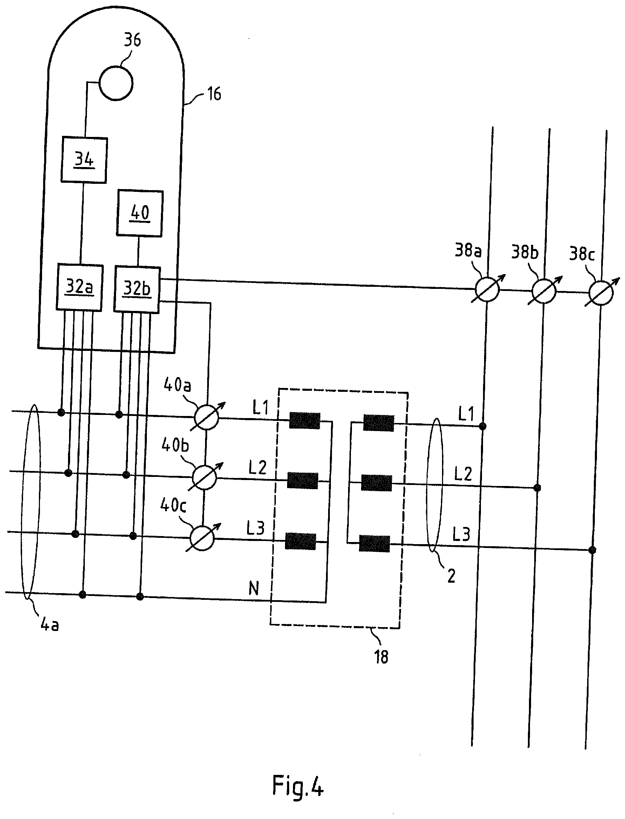

Figur 4 zeigt eine Ladestation 16. In der Ladestation 16 ist eine erste Messeinrichtung 32a angeordnet. Die erste Messeinrichtung 32a ist über geeignete Anschlusstechnik und beispielsweise auch Sicherungen an jede Phase L1, L2, L3 als auch den Nullleiter N des Niederspannungsnetzes 4a angeschlossen. Über eine Ladeelektronik 34 ist die Messeinrichtung 32a mit dem Ausgang 36 der Ladestation 16 verbunden. Über die Messeinrichtung 32a, die Ladeelektronik 34 und den Ausgang 36 ist es möglich, ein Elektrofahrzeug mit dem Niederspannungsnetz 4a zu verbinden und elektrische Energie mit dem Niederspannungsnetz auszutauschen. Hierbei misst die Messeinrichtung 32a die während des Ladevorgangs oder des Entladevorgangs ausgetauschte elektrische Energie und stellt diese Information beispielsweise zu Abrechnungszwecken datentechnisch zur Verfügung.

Völlig unabhängig davon ist in der Ladestation 16 insbesondere in dessen Gehäuse eine zweite Messeinrichtung 32b angeordnet. Diese zweite Messeinrichtung 32b operiert vollkommen disjunkt von der Messeinrichtung 32a, ist jedoch auch an die Phasen L1, L2, L3 und den Nullleiter N des Niederspannungsnetzes 4a angeschlossen. Die zweite Messeinrichtung 32b kann als logisch von der ersten Messeinrichtung 32a entkoppelt und/oder getrennt angesehen werden.

Das Niederspannungsnetz 4a ist über den Ortsnetztransformator 18 mit dem Mittelspannungsnetz 2 verbunden. In dem Ortsnetztransformator 18 erfolgt eine galvanische Trennung zwischen dem Niederspannungsnetz 4a und dem Mittelspannungsnetz 2. Außerdem erfolgt eine Umspannung der Mittelspannungsebene auf die Niederspannungsebene.

Die Ladestation 16 ist vorwiegend in elektrischer Nähe zu dem Ortsnetztransformator 18 angeschlossen. Das heißt, dass die Leitungslänge zwischen dem Ausgang des Ortsnetztransformator 18 und der Ladestation 16 kürzer ist, als jede andere Leitungslänge zwischen dem Ausgang des Ortsnetztransformators 18 und einem weiteren Teilnehmer innerhalb des Niederspannungsnetzes 4a. Die über die Messeinrichtung 32b gemessenen Spannungswerten pro Phase, also die Spannungen zwischen den Phasen L1 und L2, L2 und L3 sowie L1 und L3 und/oder die Spannung zu dem jeweiligen Sternpunkt also die Spannungen L1 zu N, L2 zu N und L3 zu N können mit der Messeinrichtung 32b erfasst werden Diese Spannungen können vorzugsweise unter Verwendung einer zusätzlichen niederspannungsseitigen Messung des Stromflusses durch den Ortsnetztransformator 18 in die Eingangsspannungen auf der Mittelspannungsseite umgerechnet werden.

Da die elektrische Nähe zwischen der Ladestation 16 und dem Ortsnetztransformator 18 gewährleistet ist, ist es möglich, mit Hilfe der gemessenen Spannungswerte und ggf. zusätzlicher sekundärseitiger Strommesswerte und beispielsweise der Kenntnis des elektrischen Aufbaus des Ortsnetztransformators 18 Rückschlüsse auf die Eingangsspannung zwischen den Phasen L1 - L3 des Mittelspannungsnetzes 2 zu ziehen. Hierfür können Stromzangen 40a-c an den drei sekundärseitigen Phasen L1, L2 und L3 angeschlossen sein, mit deren Hilfe diese sekundärseitigen Stromstärken messbar sind.

Zusätzlich zu der Spannungsmessung kann die Messeinrichtung 32b mit Stromzangen 38a-c verbunden sein. Mittels der Stromzangen 38, die primärseitig in der Ortsnetzstation 18 im Mittelspannungsnetz angeschlossen sind, also auf der Mittelspannungsebene 2, ist es möglich, die Ströme im Mittelspannungsnetz am Ort des Ortsnetztransformators zu erfassen. Die physikalisch erfassten Messwerte können von den Stromzangen 38a - c an die zweite Messeinrichtung 32b übermittelt werden. Dort können diese Werte in Ist-Größen umgewandelt werden. Hiermit ist eine genauere Bestimmung der der Leistungsflüsse in der Mittelspannung am Ort des Ortsnetzstransformators 18 möglich.

Die physikalisch gemessenen Werte oder die errechneten Ist-Werte der Eingangsspannung, der Stromstärke und/oder der Phasenlage an der Mittelspannungsebene 2 des Ortsnetztransformators 18 können von der Messeinrichtung 32b oder unter Nutzung der in der Ladestation 16 vorhandenen Kommunikationseinrichtung 40 über das Weitverkehrsnetz 22 an die Zentrale 24 und/oder unmittelbar an einen Stufensteller 12, 26, 30 übertragen werden.

In dem Gehäuse der Ladestation 16 sind somit 2 disjunkt voneinander arbeitende Messeinrichtung 32a, 32b angeordnet. Die Messeinrichtung 32b erfasst vollkommen unabhängig von einem Ladevorgang an der Ladestation 16 die sekundärseitige Spannung des Ortsnetztransformators 18. Hierzu ist die Ladestation 16 elektrisch nah an dem Ortsnetztransformator 18 angeordnet. Über eine zusätzliche primärseitige Strommessung ist die Messeinrichtung 32b darüber hinaus in der Lage, auch die für eine Leistungsflussrechnung benötigten Informationen zu liefern.

## Patentansprüche

1. Verfahren zur Erfassung einer elektrischen Größe eines elektrischen Verteilnetzes umfassend:
- eine mit dem Verteilnetz elektrisch verbundene Ladestation für Elektrofahrzeuge, wobei die Ladestation in einem Gehäuse angeordnet ist. zumindest eine erste Messeinrichtung zur Erfassung von an Elektrofahrzeuge abgegebener elektrischer Leistung und,
- eine zweite, von der ersten Messeinrichtung getrennt arbeitende, zumindest in Teilen in dem Gehäuse angeordnete Messeinrichtung aufweist, wobei
- durch die zweite Messeinrichtung unabhängig von einem Ladevorgang eines Elektrofahrzeugs zumindest eine niederspannungsseitige elektrische Größe des Verteilnetzes gemessen wird,
- eine von der gemessenen elektrischen Größe abhängige Ist-Größe an eine von der Ladestation räumlich getrennt angeordnete Zentrale fernübertragen wird, und
- die Ist-Größe mit einer Soll-Größe verglichen wird und ein Vergleichsergebnis ausgegeben wird,
**dadurch gekennzeichnet, dass**
abhängig vom Vergleichsergebnis zwischen der Ist-Größe und der Soll-Größe eine Einstellung einer Mittelspannung eines Mittelspannungsnetzes oder eine Einstellung einer Niederspannung eines Niederspannungsnetzes bewirkt wird.

2. Verfahren nach Anspruch 1,
**dadurch gekennzeichnet, dass**
- abhängig vom Vergleichsergebnis zwischen der Ist-Größe und der Soll-Größe die Einstellung der Mittelspannung des Mittelspannungsnetzes an einer Umspanneinrichtung zwischen einem Hochspannungsnetz und dem Mittelspannungsnetz oder die Einstellung der Niederspannung des Niederspannungsnetzes an einem Ortsnetztransformator zwischen dem Mittelspannungsnetz und dem Niederspannungsnetz bewirkt wird.

3. Verfahren nach einem der Ansprüche 1 oder 2,
**dadurch gekennzeichnet, dass**
die gemessene elektrische Größe in einem Niederspannungsnetz, insbesondere in elektrischer Nähe zu einem Ortsnetztransformator erfasst wird.

4. Verfahren nach einem der Ansprüche 1 bis 3,
**dadurch gekennzeichnet, dass**
die Ladestation in elektrischer Nähe zu dem Ortsnetztransformator angeordnet ist und/oder dass die elektrische Größe räumlich einem Ortsnetztransformator zugeordnet erfasst wird, insbesondere dass die Ladestation der erste an dem Ortsnetztransformator elektrisch angeschlossene Teilnehmer eines Leitungsstrangs ist und/oder dass die Länge der Leitung zwischen dem Ortsnetztransformator und der Ladestation weniger als 10 % der Gesamtlänge des Leitungsstrangs ist und/oder dass die Länge der Leitung zwischen dem Ortsnetztransformator und der Ladestation kürzer ist als jede andere Leitung zwischen dem Ortsnetztransformator und einem daran angeschlossenen Teilnehmer ist.

5. Verfahren nach einem der Ansprüche 1 bis 4,
**dadurch gekennzeichnet, dass**
in Abhängigkeit von einer Dimensionierung eines Ortsnetztransformators aus der gemessenen elektrischen Größe eine Ist-Größe errechnet wird, wobei die Ist-Größe eine elektrische Größe eines Mittelspannungsnetzes repräsentiert.

6. Verfahren nach einem der Ansprüche 1 bis 5,
**dadurch gekennzeichnet, dass**
mit der zweiten Messeinrichtung eine elektrische Spannung des Verteilnetzes, insbesondere zur Erfassung jeweils einer Leiter-Erdspannung zwischen jeweils einer Phase und dem Nullleiter, insbesondere in einem Niederspannungsnetz erfasst wird.

7. Verfahren nach einem der Ansprüche 1 bis 6,
**dadurch gekennzeichnet, dass**
mit der zweiten Messeinrichtung eine elektrische Stromstärke in zumindest einer Phase, insbesondere in einem Niederspannungsnetz oder Mittelspannungsnetz erfasst wird, wobei insbesondere die erfasste Messgröße an die niederspannungsseitig angeordnete zweite Messeinrichtung übertragen wird.

8. Verfahren nach einem der Ansprüche 1 bis 7,
**dadurch gekennzeichnet, dass** die gemessene elektrische Größe zumindest eine aus:
A) einer elektrischen Spannung zumindest einer Phase,
B) eine elektrische Stromstärke zumindest einer Phase,
C) eine Wirk- und/oder Blind- und/oder Scheinleistung,
D) ein Phasenwinkel zwischen Strom und Spannung auf einer Phase,
E) ein Phasenwinkel zwischen Strom und/oder Spannung zwischen zumindest zwei Phasen
ist.

9. Verfahren nach einem der Ansprüche 1 bis 8,
**dadurch gekennzeichnet, dass**
abhängig vom Vergleichsergebnis ein Stufensteller eines Umspanntransformatorsin dem Mittelspannungsnetz oder zwischen einem Hochspannungsnetz und dem Mittelspannungsnetz betrieben wird oder dass abhängig vom Vergleichsergebnis ein Mittelspannungsregler innerhalb des Mittelspannungsnetzes oder ein Niederspannungsregler am Ortsnetztransformator betrieben wird.

10. Verfahren nach einem der Ansprüche 1 bis 9,
**dadurch gekennzeichnet, dass**
abhängig vom Vergleichsergebnis ein Leistungsfluss innerhalb des Verteilnetzes berechnet wird.

11. System mit einer Ladestation für Elektrofahrzeuge eingerichtet zur Erfassung einer elektrischen Größe eines elektrischen Verteilnetzes wobei die Ladestation in einem Gehäuse angeordnet ist, elektrisch mit einem Niederspannungsnetz verbunden ist und zumindest eine erste Messeinrichtung zur Erfassung von an Elektrofahrzeuge abgegebene elektrische Leistung aufweist und eine zweite Messeinrichtung zumindest in Teilen in dem Gehäuse angeordnet ist und dazu eingerichtet ist, unabhängig von einem Ladevorgang eines Elektrofahrzeugs zumindest eine elektrische Größe des Verteilnetzes zu messen, wobei eine Übertragungseinrichtung dazu ausgelegt ist, eine von der gemessenen elektrischen Größe abhängige Ist-Größe an eine von der Ladestation räumlich getrennt angeordnete Zentrale fernzuübertragen; wobei das System einen Ortsnetztransformator eines elektrischen Verteilnetzes zwischen einem Niederspannungsnetz und einem Mittelspannungsnetz beinhaltet, wobei der Ortsnetztransformator derart ausgelegt ist, in Abhängigkeit von einem Vergleichsergebnis zwischen der Ist-Größe und der Soll-Größe eine Einstellung einer Spannung des Verteilnetzes vorzunehmen.

## Claims

1. A method of obtaining an electrical quantity of an electrical distribution network comprising:
- a charging station for electric vehicles electrically connected to the distribution network, wherein the charging station is arranged in a housing,
- at least one first measuring device for ontaining electrical power delivered to electric vehicles and,
- a second measuring device which operates separately from the first measuring device and is arranged at least in parts in the housing, wherein
- at least one low-voltage electrical quantity of the distribution network on the low-voltage side is measured by the second measuring device independently of a charging process of an electric vehicle,
- an actual quantity dependent on the measured electrical quantity is remotely transmitted to a central control station located separately from the charging station, and
- the actual quantity is compared with a target quantity and a comparison result is output,
**characterised in that**
- depending on the result of the comparison between the actual quantity and the target quantity, an adjustment of a medium voltage of a medium voltage network or an adjustment of a low voltage of a low voltage network is effected.

2. Method according to claim 1,
**characterised in that**
- depending on the result of the comparison between the actual quantity and the target quantity, the adjustment of the medium voltage of the medium-voltage network is effected at a transformer between a high-voltage network and the medium-voltage network or the adjustment of the low voltage of the low-voltage network is effected at a local network transformer between the medium-voltage network and the low-voltage network.

3. Method according to one of claims 1 or 2,
**characterized in that**
the measured electrical quantity is ontained in a low-voltage network, in particular in electrical proximity to a local network transformer.

4. Method according to one of claims 1 to 3,
**characterized in that**
the charging station is arranged in electrical proximity to the local network transformer and/or that the electrical quantity is ontained spatially assigned to a local network transformer, in particular that the charging station is the first subscriber of a line section electrically connected to the local network transformer and/or that the length of the line between the local network transformer and the charging station is less than 10% of the total length of the line section and/or that the length of the line between the local network transformer and the charging station is shorter than any other line between the local network transformer and a subscriber connected thereto.

5. Method according to one of claims 1 to 4,
**characterized in that**
an actual value is calculated from the measured electrical quantity as a function of a dimensioning of a local network transformer, the actual value representing an electrical quantity of a medium-voltage network.

6. Method according to one of claims 1 to 5,
**characterized in that**
an electrical voltage of the distribution network, in particular for detecting in of a respective conductor-earth voltage between in a respective phase and the neutral conductor, in particular in a low-voltage network, is obtained with the second measuring device.

7. Method according to one of claims 1 to 6,
**characterized in that**
an amperage is obtained in at least one phase, in particular in a low-voltage network or medium-voltage network, using the second measuring device, wherein in particular the obtained measured quantity is transmitted to the second measuring device arranged on the low-voltage side.

8. Method according to one of claims 1 to 7,
**characterized in that**
the measured electrical quantity is at least one of:
A) an electrical voltage of at least one phase,
B) an amperage of at least one phase,
C) an active and/or reactive and/or apparent power
D) a phase angle between current and voltage on one phase,
E) a phase angle between current and/or voltage between at least two phases.

9. Method according to one of claims 1 to 8,
**characterized in that**,
depending on the result of the comparison, a tap-controller of a transformer in the medium-voltage network or between a high-voltage network and the medium-voltage network is operated, or that, depending on the result of the comparison, a medium-voltage controller within the medium-voltage network or a low-voltage controller at the local network transformer is operated.

10. Method according to one of claims 1 to 9,
**characterised in that**
a power flow within the distribution network is calculated depending on the result of the comparison.

11. System having a charging station for electric vehicles, arranged for detecting an electrical quantity of an electrical distribution network, the charging station being arranged in a housing, being electrically connected to a low-voltage network and having at least one first measuring device for detecting electrical power which is output to electric vehicles, and a second measuring device being arranged at least in parts in the housing and being arranged for measuring at least one electrical quantity of the distribution network independently of a charging process of an electric vehicle, a transmission device being arranged to remotely transmit an actual quantity which is dependent on the measured electrical quantity to a control centre which is arranged spatially separate from the charging station; the system including a local network transformer of an electrical distribution network between a low-voltage network and a medium voltage network, the local network transformer being arranged to adjust a voltage of the distribution network as a function of a the result of the comparison between the actual quantity and the desired quantity.

## Revendications

1. Procédé de détection d'une grandeur électrique d'un réseau de distribution électrique comprenant :
- une borne de recharge pour des véhicules électriques, ladite borne de recharge étant raccordée électriquement au réseau de distribution, où la borne de recharge, qui est disposée dans un boîtier,
- au moins un premier appareil de mesure servant à la détection d'une puissance électrique fournie à des véhicules électriques, et
- un deuxième appareil de mesure disposé au moins en partie dans le boîtier et fonctionnant séparément du premier appareil de mesure, où
- au moins une grandeur électrique du réseau de distribution, côté basse tension, est mesurée par le deuxième appareil de mesure, indépendamment d'une opération de recharge d'un véhicule électrique,
- une grandeur réelle, qui dépend de la grandeur électrique ayant été mesurée, est télétransmise à une centrale disposée en étant physiquement séparée de la borne de recharge, et
- la grandeur réelle est comparée à une grandeur théorique et un résultat de la comparaison est délivré,
**caractérisé**
**en ce qu'**un réglage d'une moyenne tension d'un réseau moyenne tension, ou bien un réglage d'une basse tension d'un réseau basse tension, est effectué en fonction du résultat de la comparaison ayant été faite entre la grandeur réelle et la grandeur théorique.

2. Procédé selon la revendication 1,
**caractérisé**
**en ce que** le réglage de la moyenne tension du réseau moyenne tension, au niveau d'un poste de transformation fonctionnant entre un réseau haute tension et le réseau moyenne tension, ou bien le réglage de la basse tension du réseau basse tension,
au niveau d'un transformateur de réseau local fonctionnant entre le réseau moyenne tension et le réseau basse tension, est effectué en fonction du résultat de la comparaison ayant été faite entre la grandeur réelle et la grandeur théorique.

3. Procédé selon l'une des revendications 1 ou 2, **caractérisé en ce que** la grandeur électrique mesurée est détectée dans un réseau basse tension, en particulier à proximité électrique d'un transformateur de réseau local.

4. Procédé selon l'une quelconque des revendications 1 à 3, **caractérisé en ce que** la borne de recharge est disposée à proximité électrique du transformateur de réseau local et/ou **en ce que** la grandeur électrique est détectée en étant associée physiquement à un transformateur de réseau local, ledit procédé étant caractérisé en particulier **en ce que** la borne de recharge est le premier utilisateur d'un faisceau de câbles, ledit utilisateur étant raccordé électriquement au transformateur de réseau local et/ou **en ce que** la longueur du câble se trouvant entre le transformateur de réseau local et la borne de recharge est égale à moins de 10 % de la longueur totale du faisceau de câbles et/ou **en ce que** la longueur du câble se trouvant entre le transformateur de réseau local et la borne de recharge est plus courte que celle de tout autre câble se trouvant entre le transformateur de réseau local et un utilisateur raccordé audit transformateur de réseau local.

5. Procédé selon l'une quelconque des revendications 1 à 4, **caractérisé en ce que**, en fonction d'un dimensionnement d'un transformateur de réseau local, une grandeur réelle est calculée à partir de la grandeur électrique ayant été mesurée, où la grandeur réelle représente une grandeur électrique d'un réseau moyenne tension.

6. Procédé selon l'une quelconque des revendications 1 à 5, **caractérisé en ce qu'**une tension électrique du réseau de distribution est détectée avec le deuxième appareil de mesure, en particulier pour la détection à chaque fois d'une tension de terre du conducteur, ladite tension de terre s'appliquant à chaque fois entre une phase et le neutre, en particulier dans un réseau basse tension.

7. Procédé selon l'une quelconque des revendications 1 à 6, **caractérisé en ce qu'**une intensité de courant électrique dans au moins une phase est détectée avec le deuxième appareil de mesure, ladite détection se produisant en particulier dans un réseau basse tension ou dans un réseau moyenne tension, où en particulier la grandeur mesurée ayant été détectée est transmise au deuxième appareil de mesure disposé côté basse tension

8. Procédé selon l'une quelconque des revendications 1 à 7, **caractérisé en ce que** la grandeur électrique mesurée est au moins une grandeur :
A) d'une tension électrique d'au moins une phase,
B) d'une intensité de courant électrique d'au moins une phase,
C) d'une puissance active et/ou d'une puissance réactive et/ou d'une puissance apparente,
D) d'un angle de phase entre le courant et la tension sur une phase,
E) d'un angle de phase entre le courant et/ou la tension entre au moins deux phases.

9. Procédé selon l'une quelconque des revendications 1 à 8, **caractérisé en ce que**, en fonction du résultat de comparaison, un changeur de prises d'un transformateur de puissance est actionné dans le réseau moyenne tension ou entre un réseau haute tension et le réseau moyenne tension, ou bien **en ce que**, en fonction du résultat de comparaison, un régulateur de moyenne tension est actionné à l'intérieur du réseau moyenne tension, ou bien un régulateur de basse tension est actionné au niveau du transformateur de réseau local.

10. Procédé selon l'une quelconque des revendications 1 à 9, **caractérisé en ce que**, en fonction du résultat de comparaison, un flux de puissance est calculé à l'intérieur du réseau de distribution.

11. Système comprenant une borne de recharge pour des véhicules électriques, ledit système étant configuré pour la détection d'une grandeur électrique d'un réseau de distribution électrique, où la borne de recharge, qui est disposée dans un boîtier, est raccordée électriquement à un réseau basse tension et présente au moins un premier appareil de mesure servant à la détection d'une puissance électrique fournie à des véhicules électriques, et un deuxième appareil de mesure est disposé au moins en partie dans le boîtier, et est configuré pour mesurer, indépendamment d'une opération de recharge d'un véhicule électrique, au moins une grandeur électrique du réseau de distribution, où un dispositif de transmission est conçu dans le but de télétransmettre à une centrale disposée en étant physiquement séparée de la borne de recharge, une grandeur réelle dépendant de la grandeur électrique ayant été mesurée ; où le système comprend en outre un transformateur de réseau local d'un réseau de distribution électrique, ledit transformateur de réseau local fonctionnant entre un réseau moyenne tension et un réseau basse tension entre, où le transformateur de réseau local est conçu de manière, en fonction d'un résultat de la comparaison ayant été faite entre la grandeur réelle et la grandeur théorique, à procéder à un réglage d'une tension du réseau de distribution.
